# EUROPÄISCHE PATENTSCHRIFT

(11) **EP 0 573 847 B1**
(45) Veröffentlichungstag und Bekanntmachung des Hinweises auf die Patenterteilung: **17.03.1999**
(21) Anmeldenummer: 93108558.3
(22) Anmeldetag: 27.05.1993
(51) Int. Cl.: C04B 24/38

(54) **Verwendung von carboxymethylierten Methylhydroxyethyl- oder Methylhydroxypropylcelluloseethern und daraus erhältliche Zementmischungen**
Use of carboxymethylated methylhydroxyethyl or methylhydroxypropyl cellulose ethers and cementitious compositions obtainable thereof
Utilisation des éthers de méthylhydroxyéthyl cellulose ou méthylhydroxypropylcellulose carboxyméthylés et compositions de ciment résultantes

(30) Priorität: 06.06.1992 DE 4218737
(43) Veröffentlichungstag der Anmeldung: 15.12.1993
(73) Patentinhaber: Clariant GmbH, 65929 Frankfurt am Main (DE)
(72) Erfinder: Bartz, Uwe, W-6227 Oestrich-Winkel (DE); Dönges, Reinhard, Dr., W-6232 Bad Soden/Ts (DE); Klehr, Heiner, W-6500 Mainz (DE)

(56) Entgegenhaltungen:
- EP-A- 0 117 431
- DE-A- 3 910 730
- GB-A- 2 080 812
- US-A- 4 707 187

## Beschreibung

In der Baustoffindustrie werden zum Mauern, Verputzen, Kleben, Spachteln und Restaurieren Kalkhydrat- und Zementmischungen eingesetzt. Zur Verbesserung des Wasserrückhaltevermögens setzt man den Kalkhydrat- und Zementmischungen wasserlösliche Polymere zu, mit denen ein Wasserverlust der Kalkhydrat- und Zementmassen auf stark saugenden Untergründen vor dem Abbinden und damit eine ungenügende Durchhärtung oder Rißbildung des Putzes verhindert werden soll.

Bisher war es üblich als wasserlösliche Polymere nicht-ionische Celluloseether, wie Methylcellulose (MC), Hydroxyethylcellulose (HEC), Methylhydroxyethylcellulose (MHEC) oder Methylhydroxypropylcellulose (MHPC), zuzusetzen.

Die Wirkung der vorgenannten Celluloseether auf das Wasserrückhaltevermögen von Kalkhydrat- und Zementmischungen ist allerdings nur bei Temperaturen von weniger als 30°C gewährleistet; höhere Temperaturen - wie sie in mitteleuropäischen Breiten häufiger und in tropischen Breiten regelmäßig anzutreffen sind - führen zu einer störenden Abnahme des Wasserrückhaltevermögens.

Aus DE-A-39 10 730 ist die Verwendung von carboxymethylierten Methylhydroxyethyl- oder Methylhydroxypropylcelluloseethern als Zusatz zu Gipsmischungen bekannt.

Weiterhin werden laüt US-A-4 707 187 nicht-methylierte, im übrigen gleichermaßen modifizierte Cellüloseether als Additive für Zementmischüngen eingesetzt.

Aufgabe der Erfindung ist die Verbesserung des Wasserrückhaltevermögens von Kalkhydrat- und Zementmischungen bei Temperaturen von 30°C und darüber zu erreichen.

Trotz der hohen Calciumionenkonzentration in Kalkhydrat- und Zementmischungen und der bekannten Empfindlichkeit von Carboxymethylgruppen tragenden Celluloseethern gegenüber Calciumionen, hat sich überraschenderweise gezeigt, daß durch die Verwendung von carboxymethylierten Methylhydroxyethyl- und Methylhydroxypropylcelluloseethern mit den nachstehend genannten Spezifikationen diese Aufgabe gelöst wird.

Gegenstand der Erfindung ist die Verwendung von carboxymethylierten Methylhydroxyethyl- und Methylhydroxypropylcelluloseethern mit einem DS_{Alkyl} von 1,0 bis 2,0, einem DS_{Carboxyalkyl} von 0,005 bis 0,6 und einem MS_{Hydroxyalkyl} von 0,05 bis 1 als Zusatz zu Kalkhydrat- und Zementmischungen.

Gemäß einer vorteilhaften Ausführung der Erfindung weisen die carboxymethylierten Methylhydroxyethyl- und Methylhydroxypropylcelluloseether folgende Substitutionsgrade auf: DS_{Alkyl} 1,3 bis 1,9, DS_{Carboxyalkyl} 0,01 bis 0,1 und MS_{Hydroxyalkyl} 0,05 bis 0,4.

Bevorzugt weisen die erfindungsgemäß zu verwendenden carboxymethylierten Methylhydroxyethyl- und Methylhydroxypropylcelluloseether Viskositäten von 100 bis 300000 mPas (nach Höppler, 2 %ige wäßrige Lösung, 20°C) auf. Erfindungsgemäß werden die carboxymethylierten Methylhydroxyethyl- oder Methylhydroxypropylcelluloseether in einer Menge von 0,001 bis 5 Gew.-%, bezogen auf das Trockengewicht der Mischung, eingesetzt. Üblicherweise werden die erfindungsgemäß zu verwendenden carboxymethylierten Methylhydroxyethyl- und Methylhydroxypropylcelluloseether in Korngrößen von etwa 200 µm oder weniger eingesetzt. Es kommen auch Granulate mit einer Korngröße bis 700 µm zum Einsatz.

Ebenfalls Gegenstand der Erfindung sind Kalkhydrat- und Zementmischungen, die unter Verwendung von carboxymethylierten Methylhydroxyethyl- bzw. Methylhydroxypropylcelluloseethern mit den obengenannten Spezifikationen erhältlich sind.
Die Kalkhydrat- und Zementmischungen können weiterhin übliche Hilfsstoffe und/oder Modifizierungsmittel enthalten.
Typische Beispiele für Hilfsstoffe sind Hydrokolloide, Luftporenbildner, Kunststoffdispersionspulver, Hydrophobiermittel, Quellmittel, Füllstoffe und Leichtzuschlagstoffe, weiterhin Verflüssiger sowie Verzögerer oder Beschleuniger. Typische Beispiele für Modifizierungsmittel sind Stärke, Stärkeether und Polyacrylamide.
Es ist auch denkbar, die vorstehend genannten nicht-ionischen Celluloseether zu verwenden.
Typische Füllstoffe sind Quarzsand oder Kalksteinsand oder deren Mehle (Korngröße: 5µm - 5mm).
Die vorgenannten Hilfsstoffe sind dem Fachmann auf dem hier angesprochenen Gebiet der Kalkhydrat- und Zementmischungen bekannt.

Die Kalkhydratmischungen besitzen üblicherweise folgende Zusammensetzung:

| | | | | |
|---|---|---|---|---|
| 95 | - | 19,999 | Gew.-% | Quarzsand, Kalksteinsand und/oder deren Mehle |
| 5 | - | 80 | Gew.-% | Kalkhydrat |
| 0,001 | - | 5 | Gew.-% | Celluloseether |
| 0 | - | 10 | Gew.-% | Kunststoffdispersionspulver |
| 0 | - | 5 | Gew.-% | Leichtzuschlagstoffe |
| 0 | - | 1 | Gew.-% | Hydrophobiermittel |
| 0 | - | 0,5 | Gew.-% | Stärkeether |
| 0 | - | 0,1 | Gew.-% | Luftporenbildner |

Die Zementmischungen besitzen üblicherweise folgende Zusammensetzung:

| | | | | |
|---|---|---|---|---|
| 95 | - | 0 | Gew.-% | Quarzsand, Kalksteinsand und/oder deren Mehle |
| 5 | - | 99,999 | Gew.-% | Zement |
| 0,001 | - | 5 | Gew.-% | Celluloseether |

Die Kalkhydrat/Zementmischungen besitzen üblicherweise folgende Zusammensetzung:

| | | | | |
|---|---|---|---|---|
| 95 | - | 19,889 | Gew.-% | Quarzsand, Kalksteinsand und/oder deren Mehle |
| 0,11 | - | 80 | Gew.-% | Zement |
| 0,11 | - | 80 | Gew.-% | Kalkhydrat |
| 0,001 | - | 5 | Gew.-% | Celluloseether |

Die vorstehend für die Kalkhydratmischungen genannten Hilfsstoffe können ebenfalls für Zement- und Kalkhydrat/Zementmischungen eingesetzt werden. Bevorzugt werden 3 - 40 Gew.-%, besonders bevorzugt 10 - 30 Gew.-% Zement in den Zementmischungen und Kalkhydrat/Zementmischungen und bevorzugt 3 bis 30 Gew.-%, besonders bevorzugt 10 - 20 Gew.-% Kalkhydrat in den Kalkhydrat- und Kalkhydrat/Zementmischungen eingesetzt.

Die Erfindung wird im folgenden anhand von bevorzugten Ausführungsbeispielen und Vergleichsbeispielen näher erläutert.
Die Prozentangaben bedeuten Gewichtsprozent.

Aus den jeweils zugehörigen Tabellen gehen die Einsatzmengen und die durch die anionische Substitution bewirkte Steigerung der Flocktemperatur hervor. Unter Flocktemperatur wird die Temperatur verstanden, bei der eine 1 %ige Lösung des Celluloseethers noch 50 % der bei Raumtemperatur gemessenen Transparenz aufweist.

### Herstellungsbeispiel:

Herstellung von Methylhydroxyethylcarboxymethylcellulose (MHECMC) 162 g gemahlenen Zellstoffs werden in einem Lödigemischer mit einer Lösung von Ätznatron in 200 ml Wasser alkalisiert. Anschließend wird Natriummonochloressigsäurelösung innerhalb von 5 Minuten hinzugegeben und 15 Minuten weiter gemischt. Nach Überführen in ein druckfestes Rührgefäß, Evakuieren und Überlagern mit Stickstoff, wird ein Gemisch von 1260 g Methylchlorid und 22 g Ethylenoxid aufgedrückt und bei einer Temperatur von 80 bis 90°C über einen Zeitraum von 60 Minuten verethert. Das erhaltene Produkt wird mit heißem Wasser weitgehend salzfrei gewaschen, getrocknet und für den Anwendungstest fein gemahlen. Produkte, die in heißem Wasser löslich sind, werden mit 80 gew.-%igem wäßrigem Isopropanol gewaschen.

Tabelle 1 zeigt die Kenndaten der Methylhydroxyethylcelluloseether (Vergleich) bzw. der hergestellen carboxymethylierten Derivate.

Herstellung von Methylhydroxyethylcarboxymethylcelluloseether (MHECMC) 3000 g Fichtenzellstoff werden in einem Reaktionsmischer mit 17 l 95 %igem Dimethylglykol suspendiert. Nach Überlagern mit Stickstoff wird mit 50 %iger Natronlauge (I) alkalisiert, wahlweise Natriummonochloracetat oder 80 %ige Monochloressigsäure untergemischt, Ethylenoxid zudosiert und 60 Minuten bei 80 bis 90°C verethert. Nach Zugabe einer zweiten Portion konzentrierter Natronlauge (II) wird mit Methylchlorid 60 Minuten bei 100°C umgesetzt. Das Suspensionsmittel wird anschließend abdestilliert und das Produkt einmal mit Wasser bei ca. 95°C gewaschen und anschließend mit 80 %igem wäßrigem Isopropanol nachgewaschen.

Tabelle 2 zeigt die Kenndaten des Methylhydroxyethylcelluloseethers (Vergleich) bzw. der hergestellten carboxymethylierten Derivate.

Herstellung von Methylhydroxypropylcarboxymethylcelluloseether (MHPCMC) 3000 g Fichtenzellstoff werden in einem Reaktionsmischer mit 17 l 95 %igem Dimethylglykol suspendiert. Nach Überlagern mit Stickstoff wird mit 50 %iger Natronlauge alkalisiert, 80 %ige Monochloressigsäure untergemischt, Propylenoxid zudosiert und 60 Minuten bei 80 bis 90°C verethert. Nach Zugabe einer zweiten Portion konzentrierter Natronlauge wird mit Methylchlorid 60 Minuten bei 100°C umgesetzt. Das Suspensionsmittel wird anschließend abdestilliert und das Produkt einmal mit Wasser bei ca. 95°C gewaschen und anschließend mit 80 %igem wäßrigem Isopropanol nachgewaschen.

Tabelle 3 zeigt die Kenndaten des Methylhydroxypropylcelluloseethers (Vergleich) bzw. der hergestellten carboxymethylierten Derivate.

Das Wasserrückhaltevermögen (WRV) der Kalkhydrat- und Zementmischungen gemäß der Erfindung und der zu Vergleichszwecken herangezogenen Kalkhydrat- und Zementmischungen wurde wahlweise analog zu DIN 18 555, Teil 7 (Prüfung von Mörteln mit mineralischen Bindemitteln) und analog zu ASTM C 91, wie folgt bestimmt:
DIN 18 555, Teil 7:
Zu 500 g Kalkhydrat- oder Zementgrundmischung werden definierte Mengen an carboxymethylierten Methylhydroxyethyl- oder Methylhydroxypropylcelluloseethern gegeben. Die erhaltenen Mischungen werden innerhalb von 15 sec. in die erforderliche Menge Wasser von 20°C eingerührt und anschließend ca. 30 sec. mit einem Mörtelmischer bei mittlerer Geschwindigkeit weiter gerührt. Es wird soviel Wasser zugegeben, bis der hergestellte Frischmörtel eine Konsistenz aufweist, die einem Ausbreitmaß von 170 ± 5 mm entspricht(DIN 18555, Teile 2 und 8).
Zur Bestimmung des Wasserrückhaltevermögens wird ein Plastikring mit einem Innendurchmesser von 140 mm und einer Höhe von 12 mm verwendet, der auf einen Zellstoffkarton (Zuschnitt 190 x 190 mm, Firma Schleicher & Schüll, Nr. 2727) aufliegt. Zwischen Plastikring und Zellstoffkarton befindet sich ein Faservlies (Druchmesser 185 mm, Firma Schleicher & Schüll, Nr. 0980). Für den eigentlichen Meßvorgang werden ca. 150 g der Kalkhydrat- oder Zementmischung direkt nach dem oben beschriebenen Anrühren innerhalb von 5 sec. in den Plastikring eingefüllt. Die überstehende Kalkhydrat- oder Zementmasse wird mit einem Spatel abgestreift; die im Ring befindliche Menge wird durch Auswaage genau bestimmt. Innerhalb einer Saugzeit von 5 Min. zieht der Zellstoffkarton Wasser aus der Masse ab; die genaue Menge wird durch Rückwägung des feuchten Kartons bestimmt. Das Faservlies dient lediglich dem Zweck, daß man nach 5 Minuten Saugzeit die Kalkhydrat- bzw. Zementmasse besser vom Karton abnehmen kann.
Das Wasserrückhaltevermögen ist definiert als der prozentuale Anteil der verbleibenden Wassermenge im Verhältnis zur Gesamtmenge bei Versuchsbeginn.

### ASTM C 91:

Hierbei wird über ein Vakuum den angemachten Baustoffmischungen Wasser entzogen. Der Trockenmörtel wird mit einer vorgegebenen Wassermenge in einem Labormischer angerührt. Mit dem angemischten Frischmörtel füllt man eine Nutsche und setzt sie einem Vakuum aus (Zementputz: 6700 Pa Differenzdruck, 15 min.; Fliesenkleber: 8000 Pa Unterdruck, 3 min.).
Das Wasserrückhaltevermögen ist definiert als der prozentuale Gehalt der verbleibenden Wassermenge im Verhältnis zur Gesamtwassermenge bei Versuchsbeginn.

Tabelle 4 zeigt die Zusammensetzung der eingesetzten Baustoffgemische (Gewichtsteile) und die Kenndaten der zu Vergleichszwecken eingesetzten Celluloseether.
Als Luftporenbildner wird ®Hostapur OSB (Olefinsulfonat, Na-Salz) verwendet.
Der Stärkeether besitzt folgende Kenndaten: Hydroxypropylstärke, MS_{Hydroxypropyl}:0,5, Kornfeinheit: <200 µm, Viskosität: 20 mPas (2 %ige Lösung, Höppler Viskosimeter 20°C).
Als Hydrophobiermittel wird Zinkstearat verwendet.
Als Kunststoffdispersionspulver wird ®Mowilith DM 200p verwendet.

Die Tabellen 5 bis 7 zeigen das Wasserrückhaltevermögen der in den Baustoffgemischen eingesetzten Celluloseethern (MHECMC und MHPCMC).

Die Prüfung des Wasserrückhaltevermögens erfolgt bei 20°C und bei 40°C. Bei der höheren Temperatur wurde sowohl das Arbeitsgerät, die Trockenmischung als auch das Anmachwasser auf 40°C erwärmt.

Es bedeuten:
- NaMCA =: Natriummonochloracetat
- MCE =: Monochloressigsäure
- EO =: Ethylenoxid
- MeCl =: Methylchlorid
- M =: Methyl
- HE =: Hydroxyethyl
- CM =: Na-Carboxymethyl
- MS =: Molarer Substitutionsgrad
- DS =: Durchschnittlicher Substitutionsgrad
- Δ WRV =: Abfall des Wasserrückhaltevermögens bei einer Temperaturerhöhung von 20 auf 40°C in Prozentpunkten.

**Tabelle 1**

| Bsp. Nr. | Einsatzmenge | | Substitutionsgrad | | | Salzgehalt % | Viskosität (mPas)(2%) | Flocktemp. (°C) |
|---|---|---|---|---|---|---|---|---|
| | NaOH (g) | NaMCA (g) | M | HE | CM | | | |
| 1 | 100 | 2,92 | 1,44 | 0,16 | 0,011 | 0,1 | 39000 | 83 |
| 2 | 112 | 2,92 | 1,52 | 0,12 | 0,006 | 0,2 | 82000 | 80 |
| 3 | 134 | 2,92 | 1,71 | 0,14 | 0,014 | 0,2 | 16000 | 90 |
| 4 | 144 | 2,92 | 1,79 | 0,12 | 0,010 | 0,4 | 27000 | 88 |
| 5 | 154 | 2,91 | 1,88 | 0,12 | 0,009 | 0,0 | 40000 | 80 |
| 6 | 155 | 2,91 | 1,79 | 0,12 | 0,009 | 0,0 | 55000 | 80 |
| 7 | 112 | 5,83 | 1,59 | 0,13 | 0,012 | 0,3 | 53000 | 85 |
| 8 | 124 | 5,83 | 1,63 | 0,14 | 0,021 | 0,3 | 34000 | >100 |
| 9 | 134 | 5,83 | 1,67 | 0,13 | 0,026 | 0,2 | 14000 | >100 |
| 10 | 144 | 5,83 | 1,75 | 0,12 | 0,023 | 0,2 | 36000 | 98 |
| 11 | 144 | 5,83 | 1,83 | 0,13 | 0,032 | 1,2 | 41000 | 99 |
| 12 | 144 | 5,83 | 1,79 | 0,12 | 0,020 | 0,7 | >100000 | 90 |
| 13 | 154 | 5,83 | 1,88 | 0,12 | 0,037 | 0,8 | >100000 | 93 |
| 14 | 100 | 5,83 | 1,41 | 0,12 | 0,012 | 0,1 | 43000 | 84 |
| 15 | 156 | 5,83 | 1,90 | 0,12 | 0,020 | 0,0 | >100000 | 87 |
| 16 | 158 | 11,70 | 1,88 | 0,12 | 0,033 | 1,0 | >100000 | 93 |
| 17 | 154 | 14,70 | 1,80 | 0,13 | 0,050 | 0,0 | >100000 | 98 |

| Vergl.-Bsp. Nr. | | | | | | | | |
|---|---|---|---|---|---|---|---|---|
| 1 | 154 | | 1,80 | 0,12 | -- | | 25000 | 68 |
| 2 | 154 | | 1,74 | 0,12 | -- | 0,1 | 21000 | 67 |

**Tabelle 2**

| Bsp. Nr. | Einsatzmenge (g) | | | | | Substitutionsgrad | | | Salzgehalt (%) | Visk. (mPas) (1%) | Flocktemp. (°C) |
|---|---|---|---|---|---|---|---|---|---|---|---|
| | NaOH I | NaOH II | * = NaMCA # = MCE | EO | MeCl | M | HE | CM | | | |
| 18 | 1450 | 2900 | * 105 | 237 | 2722 | 1,67 | 0,25 | 0,036 | 0,8 | 5600 | >100 |
| 19 | 1450 | 2900 | * 105 | 237 | 2722 | 1,67 | 0,25 | 0,036 | 4,6 | 3000 | >100 |
| 20 | 1524 | 3194 | # 106 | 119 | 2900 | 1,67 | 0,11 | 0,034 | 0,4 | 5700 | >100 |
| 21 | 1524 | 3194 | # 106 | 119 | 2900 | 1,67 | 0,11 | 0,034 | 1,8 | 2000 | >100 |
| 22 | 1600 | 3200 | # 106 | 237 | 2900 | 1,59 | 0,21 | 0,028 | 0,4 | 3800 | 99 |
| 23 | 1600 | 3200 | # 106 | 237 | 2900 | 1,59 | 0,21 | 0,028 | 3,4 | 1900 | 92 |

| Vergleichs-bsp. Nr. | | | | | | | | | | | |
|---|---|---|---|---|---|---|---|---|---|---|---|
| 3 | 1450 | 2680 | | 320 | 2580 | 1,74 | 0,33 | | 0,2 | 1600 | 77 |

**Tabelle 3**

| Bsp. Nr. | Einsatzmenge (g) | | | | | Substitutionsgrad | | | Salzgehalt (%) | Visk. (1%) | Flocktemp. (°C) |
|---|---|---|---|---|---|---|---|---|---|---|---|
| | NaOH I | NaOH II | MCE | PO | MeCl | M | HP | CM | | | |
| 24 | 1600 | 2900 | 106 | 313 | 2722 | 1,62 | 0,11 | 0,033 | 0,1 | 3000 | >100 |
| 25 | 1600 | 2900 | 106 | 313 | 2722 | 1,62 | 0,11 | 0,033 | 3,8 | 2800 | >100 |
| 26 | 1670 | 3200 | 159 | 313 | 2900 | 1,73 | 0,12 | 0,045 | 0,4 | 2700 | >100 |
| 27 | 1670 | 3200 | 159 | 313 | 2900 | 1,73 | 0,12 | 0,045 | 5,4 | 2100 | >100 |

| Vergleichs-bsp. Nr | | | | | | | | | | | |
|---|---|---|---|---|---|---|---|---|---|---|---|
| 4 | 1450 | 2900 | -- | 313 | 2722 | 1,66 | 0,13 | | 0,3 | 4300 | 70 |

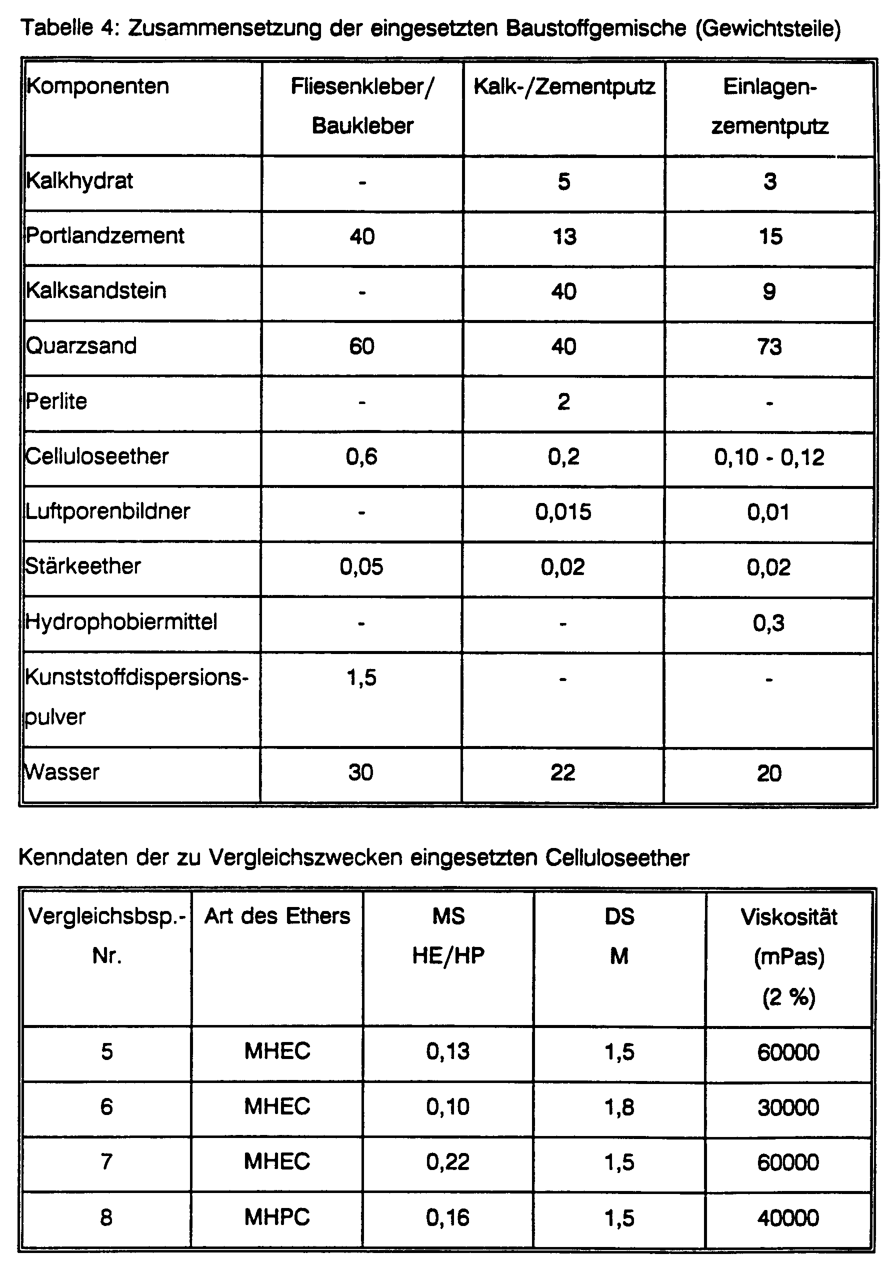

**Tabelle 5**

| Wasserrückhaltevermögen (WRV) im Fliesenkleber/Baukleber (geprüft nach ASTM C 91) | | | | |
|---|---|---|---|---|
| Bsp.-Nr. | Art des Ethers | WRV | (%) | Δ WRV |
| | | 20⁰C | 40⁰C | |
| 11 | MHECMC | 99,6 | 99,2 | 0,4 |
| 26 | MHPCMC | 99,7 | 99,1 | 0,6 |
| Vergleichsbsp.-Nr. 5 | MHEC | 99,2 | 86,1 | 13,1 |

**Tabelle 6**

| Wasserrückhaltevermögen (WRV) im Kalk-/Zementputz (geprüft nach DIN 18 555, Teil 7) | | | | |
|---|---|---|---|---|
| Bsp.-Nr. | Art des Ethers | WRV (%) | | Δ WRV |
| | | 20⁰C | 40°C | |
| 11 | MHECMC | 95,5 | 93,7 | 1,8 |
| 26 | MHPCMC | 96,4 | 95,2 | 1,2 |
| 22 | MHECMC | 97,6 | 96,8 | 0,8 |

| Vergleichsbsp.-Nr. | | | | |
|---|---|---|---|---|
| 4 | MHPC | 96,5 | 87,2 | 9,3 |
| 7 | MHEC | 95,7 | 92,1 | 5,6 |

**Tabelle 7**

| Wasserrückhaltevermögen (WRV) im Einlagenzementputz (geprüft nach ASTM C 91) | | | | |
|---|---|---|---|---|
| Beispiel-Nr. | Art des Ethers | WRV (%) | | Δ WRV |
| | | 20⁰C | 40°C | |
| 1 | MHECMC | 98,7 | 94,4 | 4,3 |
| 2 | MHECMC | 94,8 | 94,7 | 0,1 |
| 3 | MHECMC | 91,6 | 91,5 | 0,1 |
| 8 | MHECMC | 94,2 | 93,6 | 0,6 |
| 10 | MHECMC | 95,5 | 95,5 | 0 |
| 11 | MHECMC | 97,5 | 97,2 | 0,3 |
| 12 | MHECMC | 98,9 | 98,8 | 0,1 |
| 18 | MHECMC | 98,7 | 98,4 | 0,3 |
| 20 | MHECMC | 99,0 | 97,7 | 1,3 |
| 22 | MHECMC | 95,7 | 95,0 | 0,7 |
| 24 | MHPCMC | 98,5 | 95,2 | 3,3 |
| 26 | MHPCMC | 97,4 | 96,3 | 1,1 |
| 27 | MHPCMC | 96,9 | 96,1 | 0,8 |

| Vergleichsbsp.-Nr. | | | | |
|---|---|---|---|---|
| 5 | MHEC | 98,9 | 89,4 | 9,4 |
| 6 | MHEC | 94,7 | 87,5 | 7,2 |
| 7 | MHEC | 98,4 | 93,7 | 4,7 |
| 8 | MHPC | 96,4 | 91,4 | 5,0 |

## Patentansprüche

1. Verwendung von carboxymethylierten Methylhydroxyethyl- oder Methylhydroxypropylcelluloseethern mit einem DS_{Alkyl} von 1,0 bis 2,0, einem DS_{Carboxyalkyl} von 0,005 bis 0,6 und einem MS_{Hydroxyalkyl} von 0,05 bis 1 als Zusatz zu Kalkhydrat- und Zementmischungen.

2. Verwendung nach Anspruch 1, dadurch gekennzeichnet, daß die carboxymethylierten Celluloseether einen DS_{Alkyl} von 1,3 bis 1,9, einen DS_{Carboxyalkyl} von 0,01 bis 0,1 und einen MS_{Hydroxyalkyl} von 0,05 bis 0,4 aufweisen.

3. Verwendung nach Anspruch 1 oder 2, dadurch gekennzeichnet, daß die carboxymethylierten Celluloseether eine Viskosität von 100 bis 300000 mPas (nach Höppler, 2 %ige wäßrige Lösung, 20°C) aufweisen.

4. Verwendung nach einem der Ansprüche 1 bis 3, dadurch gekennzeichnet, daß die carboxymethylierten Celluloseether in einer Menge von 0,001 bis 5 Gew.-%, insbesondere 0,05 bis 1 Gew.-%, bezogen auf das Trockengewicht der Kalkhydrat- oder Zementmischung verwendet werden.

5. Kalkhydratmischung erhältlich unter Verwendung von carboxymethylierten Methylhydroxyethyl- bzw. Methylhydroxypropylcelluloseethern gemäß Anspruch 1.

6. Zementmischung erhältlich unter Verwendung von carboxymethylierten Methylhydroxyethyl- bzw. Methylhydroxypropylcelluloseethern gemäß Anspruch 1.

7. Kalkhydrat/Zementmischung erhältlich unter Verwendung von carboxymethylierten Methylhydroxyethyl- bzw. Methylhydroxypropylcelluloseethern gemäß Anspruch 1.

## Claims

1. The use of a carboxymethylated methyl hydroxyethyl cellulose ether or methyl hydroxypropyl cellulose ether having a DS_{alkyl} from 1.0 to 2.0, a DS_{carboxyalkyl} from 0.005 to 0.6 and an MS_{hydroxyalkyl} from 0.05 to 1 as an additive to mixtures of hydrated lime and cement.

2. The use as claimed in claim 1, wherein the carboxymethylated cellulose ether has a DS_{alkyl} from 1.3 to 1.9, a DS_{carboxyalkyl} from 0.01 to 0.1 and an MS_{hydroxyalkyl} from 0.05 to 0.4.

3. The use as claimed in claim 1 or 2, wherein the carboxymethylated cellulose ether has a viscosity from 100 to 300,000 mPas (according to Höppler, 2% aqueous solution, 20°C).

4. The use as claimed in any of claims 1 to 3, wherein the carboxymethylated cellulose ether is used in a quantity from 0.001 to 5% by weight, in particular 0.05 to 1% by weight, relative to the dry weight of the mixture of hydrated lime or cement.

5. A hydrated lime mixture obtainable by the use of a carboxymethylated methyl hydroxyethyl cellulose ether or methyl hydroxypropyl cellulose ether as claimed in claim 1.

6. A cement mixture obtainable by the use of a carboxymethylated methyl hydroxyethyl cellulose ether or methyl hydroxypropyl cellulose ether as claimed in claim 1.

7. A mixture of hydrated lime and cement obtainable by the use of a carboxymethylated methyl hydroxyethyl cellulose ether or methyl hydroxypropyl cellulose ether as claimed in claim 1.

## Revendications

1. Utilisation d'éthers de méthylhydroxyéthyl- ou de méthylhydroxypropylcellulose carboxyméthylés avec un degré de substitution moyen DS_{alkyle} de 1,0 à 2,0, un DS_{carboxyalkyle} de 0,005 à 0,6 et un degré de substitution molaire MS_{hydroxyalkyle} de 0,05 à 1 comme additif pour des mélanges de chaux hydratée et de ciment.

2. Utilisation selon la revendication 1, caractérisée en ce que les éthers de cellulose carboxyméthylés présentent un DS_{alkyle} de 1,3 à 1,9, un DS_{carboxyalkyle} de 0,01 à 0,1 et un MS_{hydroxyalkyle} de 0,05 à 0,4.

3. Utilisation selon la revendication 1 ou 2, caractérisée en ce que les éthers de cellulose carboxyméthylés présentent une viscosité de 100 à 300000 mPas (selon Höppler, solution aqueuse à 2%, 20°C).

4. Utilisation selon l'une des revendications 1 à 3 caractérisée en ce que les éthers de cellulose carboxyméthylés sont utilisés en une quantité de 0,001 à 5% en poids, en particulier de 0,05 à 1% en poids, par rapport au poids sec du mélange de chaux hydratée ou de ciment.

5. Mélange de chaux hydratée qu'on peut obtenir en utilisant des éthers de méthylhydroxyéthyl- ou de méthylhydroxypropylcellulose carboxyméthylés selon la revendication 1.

6. Mélange de ciment qu'on peut obtenir en utilisant des éthers de méthylhydroxyéthyl- ou de méthylhydroxypropylcellulose carboxyméthylés selon la revendication 1.

7. Mélange de chaux hydratée/ciment qu'on peut obtenir en utilisant des éthers de méthylhydroxyéthyl- ou de méthylhydroxypropylcellulose carboxyméthylés selon la revendication 1.
